# EUROPÄISCHE PATENTSCHRIFT

(11) **EP 0 353 745 B1**
(45) Veröffentlichungstag und Bekanntmachung des Hinweises auf die Patenterteilung: **20.10.1993**
(21) Anmeldenummer: 89114302.6
(22) Anmeldetag: 03.08.1989
(51) Int. Cl.: B28D 5/02, B23D 59/00, B23Q 15/007

(54) **Verfahren und Vorrichtung zur Kontrole des Schnittverlaufes beim Abtrennen von Scheiben von nichtmagnetisierbaren Werkstücken**
Method and device for the control of saw balde excursions during the cutting-off of wafers of non-magnetizable work pieces
Méthode et dispositif pour le contrôle des déviations d'une lame de scie pendant le découpage de tranches de pièces non magnétisables

(30) Priorität: 05.08.1988 DE 3826698
(43) Veröffentlichungstag der Anmeldung: 07.02.1990
(73) Patentinhaber: Wacker-Chemitronic Gesellschaft für Elektronik-Grundstoffe mbH, D-84489 Burghausen (DE)
(72) Erfinder: Junge, Joachim, Dipl.-Ing.(FH), D-8269 Burgkirchen (DE); Glas, Johann, Ing.-(grad), D-8263 Burghausen (DE); Niedermeier, Johann, D-8269 Burgkirchen (DE); Brehm, Gerhard, Dr. Dipl.-Ing., D-8261 Emmerting (DE)

(56) Entgegenhaltungen:
- EP-A- 0 269 997
- DE-A- 2 804 678
- DE-A- 3 608 572
- DE-B- 1 279 328
- IBM TECHNICAL DISCLOSURE BULLETIN. vol. 25, no. 5, Oktober 1982, NEW YORK US Seiten 2283 - 2284; P.R. CARUFE ET AL.: "System for Controlling Saw Blade Excursions During the Slicing of Silicon Crystals"
- SOLID STATE TECHNOLOGY. Juli 1985, WASHINGTON US Seiten 119 - 123; R.L. LANE: "ID Slicing Technology for Large Diameters"
- PATENT ABSTRACTS OF JAPAN vol. 14, no. 424 (M-1024)(4367) 12 September 1990

## Beschreibung

Die Erfindung betrifft ein Verfahren und eine Vorrichtung zur permanenten oder periodischen Kontrolle des Schnittverlaufes beim Abtrennen von Scheiben von nichtmagnetisierbaren Werkstücken mittels eines durch das Werkstück bewegten, zumindest teilweise aus magnetisierbarem Material gefertigten Trennwerkzeuges durch Erfassen magnetischer Wechselwirkungen zwischen dem Trennwerkzeug und einer Meßeinheit.

Das Abtrennen von Scheiben hoher geometrischer Perfektion von meist stab- oder blockförmigen Werkstücken ist insbesondere in der Halbleitertechnik von großer Bedeutung. Beispielsweise werden die von Stäben aus Elementhalbleitern wie Silicium oder Germanium oder Verbindungshalbleitern wie Galliumarsenid oder Indiumphosphid abgetrennten, in der Regel etwa 0.1 bis 1 mm dicken Scheiben zu den eigentlichen elektronischen Bauelementen weiterverarbeitet. Mit der immer höheren Integration der Bauelemente steigen auch die Anforderungen an die geometrische Qualität des benötigten Ausgangsmaterials, also der Scheiben. Ähnliches gilt für das Zertrennen von oxidischen Materialien wie etwa Gallium-Gadolinium-Granat, Rubin oder Spinell, von Gläsern auf beispielsweise Quarzbasis, oder von manchen keramischen Materialien, wo es ebenfalls in hohem Maße auf die geometrische Präzision der abgetrennten Scheiben oder der nach Abtrennung der Scheiben am Werkstück verbleibenden Flächen ankommt. Auch beim Zertrennen von Blöcken aus Solarzellengrundmaterial wie etwa gegossenem Silicium in kleinere Einzelblöcke und deren Zerteilen in Scheiben ist hohe Genauigkeit gefordert, wenngleich die Anforderungen nicht so streng wie etwa bei Material für die Bauelementeherstellung sind.

Bei diesen Trennverfahren kommen in erster Linie Innenlochsägen zum Einsatz, während in manchen Bereichen auch Außentrennsägen oder Bandsägen Verwendung finden. Als eigentliches Trennwerkzeug dient dabei das Sägeblatt oder - band, welches mit einer den eigentlichen Materialabtrag bewirkenden Schneidkante bzw. Schneidbrust versehen ist, beispielsweise einer den Sägeblattrand tropfenförmig umgebenden Beschichtung, in welche aus hartem Material bestehende Schneidkörner eingebettet sind. Bei Innenlochsägen für das Zertrennen von Siliciumstäben besteht diese Schneidkante häufig aus Nickel mit darin eingebetteten Diamantkörnern. Das Sägeblatt oder -band selbst in den meisten Fällen aus geeigneten Stählen gefertigt.

Beim Trennvorgang arbeitet sich die bewegte Schneidkante nach und nach durch das Werkstück hindurch, wobei in der Regel in die Trennstelle zusätzlich ein Kühlschmiermittel zugegeben wird, das einerseits die Aufgabe hat, die sich entwickelnde Wärme abzuführen und andererseits das abgetragene Material aus dem Sägerspalt zu entfernen. Im Verlauf des Trennvorganges kommt es immer wieder zu mehr oder weniger starken Abweichungen des tatsächlichen Trennspaltes von der idealen Schnittlinie, da die beim Sägen auftretenden Kräfte das Trennwerkzeug aus der idealen Schnittposition auslenken. Dies kann dazu führen, daß insbesondere bei großen Stabdurchmessern von etwa 10 bis 20 cm das erhaltene Produkt den Anforderungen nicht mehr entspricht und verworfen werden muß. Eine Reihe dieser Aspekte unter besonderer Berücksichtigung der Innenlochsägen ist in dem Artikel "ID Slicing Technology for large Diameters" von R.L.Lane, Solid State Technology, July 1985, S. 119-123 diskutiert.

Besondere Bedeutung kommt daher den Verfahren und Vorrichtungen zu, die es gestatten, den Schnittverlauf und Abweichungen des Trennwerkzeuges aus der idealen Position zu erfassen, und zwar auch während des Trennvorganges. Ein mögliches Kontrollsystem ist allgemein z.B. in dem im IBM Technical Disclosure Bulletin Vol. 25, No. 5, October 1982 erschienenen Artikel von P. R. Carufe et al., "System for controlling saw blade excursions during the slicing of silicon crystals" beschrieben. Dabei wird mittels eines den magnetischen Widerstand erfassenden Sensors die Abweichung des Sägeblattes beim Sägen in ein Spannungssignal umgesetzt, aufgrund dessen eine Steuereinheit das Sägeblatt mit Hilfe eines Fluids wieder in die Sollposition zurückzulenken versucht. Dieses System erfaßt jedoch nur den Sägeblattverlauf außerhalb des Sägespaltes.

Nach diesem Meßprinzip arbeiten beispielsweise die bekannten Wirbelstromsensoren, bei denen mittels einer von einem hochfrequenten Wechselstrom durchflossenen elektromagnetischen Spule im kontrollierten Trennwerkzeug Wirbelströme induziert werden. Diese rufen ihrerseits im Sensor je nach Abstand Impedanzänderungen hervor, aus denen sich dann letztlich eine dem Abstand proportionale Spannungsänderung ableiten läßt. Solche Wirbelstrommessungen werden jedoch erfahrungsgemäß durch das beim Sägevorgang unvermeidliche, oft am Trennwerkzeug anhaftende Kühlschmiermittel, in den meisten Fällen tensidhaltiges Wasser, aber auch durch das Werkstück selbst, beispielsweise im Falle von niederohmigem Halbleitermaterial wie hochdotiertem Silicium, oder auch durch Sägehilfsmittel wie Graphitschneidleisten beeinflußt und sind daher nicht immer völlig zuverlässig. Insbesondere gilt dies für Messungen, die eigentlich die genauesten Informationen über den Trennvorgang erwarten lassen, nämlich solche, bei denen die Abweichung des Trennwerkzeuges vom angestrebten Schnittverlauf innerhalb des Werkstückes verfolgt werden soll.

Aufgabe der Erfindung war es daher, ein Verfahren und eine Vorrichtung anzugeben, die zuverlässig und reproduzierbar während des Trennvorganges die Kontrolle des Schnittverlaufes innerhalb des Werkstückes ermöglichen, und zwar mit einer Genauigkeit, die auch noch die störungsfreie Erfassung von Abweichungen im µm-Bereich gestattet.

Unerwartet wurde nun gefunden, daß die oben erwähnten Störungen und Verfälschungen bei der Kontrolle des Schnittverlaufes innerhalb des Werkstückes zwar auftreten, wenn als Referenzgröße ein elektromagnetisches Wechselfeld, nicht aber, wenn ein magnetisches Gleichfeld verwendet wird.

Gelöst wird daher die Aufgabe durch ein Verfahren, welches dadurch gekennzeichnet ist, daß zwischen Meßeinheit und Trennwerkzeug ein magnetisches Gleichfeld aufgebaut wird, welches beim Trennvorgang die abzutrennende Scheibe zumindest teilweise durchläuft, wobei die dabei durch die Abweichung des Trennwerkzeuges verursachte Änderung des Gleichfeldes erfaßt wird.

Für die Durchführung des Verfahrens eignen sich Vorrichtungen, die gekennzeichnet sind durch eine Meßeinheit, welche die Erzeugung eines magnetischen Gleichfeldes und die Erfassung von Änderungen desselben gestatten, wobei die Meßeinheit in definierter Position bezüglich des Trennwerkzeuges in der Weise angeordnet ist, daß während des Trennvorganges das Gleichfeld durch die abzutrennende Scheibe hindurch mit dem Trennwerkzeug in Wechselwirkung tritt.

Für die Erzeugung des magnetischen Gleichfeldes eignen sich gleichermaßen Permanentmagneten wie Elektromagneten. Beispiele für geeignete magnetische Materialien sind in erster Linie Ferromagnetika, wie etwa manche Cr-, W-, Co-Stähle oder die als Alnico, ggf. Nb- und/oder Ti-modifiziert, Cunifer, Koerox oder Koerzit bezeichneten Legierungen oder auch die eisenfreien Heusler'schen Legierungen. Magnete auf Basis von verschiedenen Ferriten vom Spinell-, Granat- und vom hexagonalen Typ lassen sich ebenfalls einsetzen. Daneben sind auch die Seltenerdmetall-Cobalt-Legierungen vom Typ SECo₅ und SE₂Co₁₇ zu nennen, insbesondere mit SE = Pr, Sm und anderen Lanthanoidmetallen, sowie Werkstoffe der Zusammensetzung Nd₂Fe₁₄B. Wichtig bei der Auswahl des geeigneten magnetischen Materials ist vor allem, daß die beim Trennvorgang auf das Trennwerkzeug, beispielsweise ein Innenlochsägeblatt, ausgeübte Anziehungskraft nicht zu einer unzulässigen Auslenkung gegenüber der vorgesehenen Sollschnittlinie führt. Dies gilt auch für den Einsatz von Elektromagneten, die in der bekannten Art und Weise z.B. als von einer Spule umgebene Weicheisenkerne gestaltet sein können.

Die zur Erzeugung des magnetischen Gleichfeldes ausgewählten magnetischen Wirkstoffe können beispielsweise in Form von Stabmagneten eingesetzt werden. Eine andere, demgegenüber vorteilhaftere Variante besteht in der Verwendung von Ringspaltmagneten, bei denen ein als Ring oder Zylinder ausgebildeter zentraler Pol vom entgegengesetzten, ringförmigen Pol konzentrisch umgeben ist, wobei zwischen beiden Polen zweckmäßig eine Abschirmung vorgesehen ist. Solche Ringspaltmagneten haben den Vorteil, daß die Feldlinien nahezu senkrecht die Meßzonenebene durchlaufen und daher auch im wesentlichen senkrecht auf das Trennwerkzeug auftreffen. Daraus resultiert ein meßtechnisch besonders günstiger nahezu linearer Zusammenhang zwischen der Entfernung des Magneten vom Trennwerkzeug und der zwischen ihnen herrschenden Anziehungskraft. Ein weiterer Vorteil liegt darin, daß das Magnetfeld dicht hinter der Meßebene wieder verlöscht, so daß Einflüsse durch in der Umgebung vorhandene ferromagnetische Gegenstände oder Apparatebestandteile, wie etwa die gewöhnlich aus Stahl bestehende Stabhalterung, -zustellung oder der Vorschub bei Innenlochsägen oder auch Werkzeuge, auf ein Minimum beschränkt bleiben. Selbstverständlich ist auch der Einsatz von andere gestalteten Magneten, wie z.B. Hufeisenmagneten, oder Magneten bzw. Ringspaltmagneten mit quadratischem, rechteckigem oder auch nieren- oder bananenförmigem Querschnitt nicht ausgeschlossen, insbesondere wenn das durch sie erzeugte Gleichfeld diese erwähnten Eigenschaften besitzt.

Als vorteilhaft, vor allem im Hinblick auf Einflüsse durch ferromagnetisches Fremdmaterial, hat es sich auch erwiesen, das erzeugte Magnetfeld im wesentlichen nur auf das Trennwerkzeug auszurichten und seine in die übrigen Raumrichtungen weisenden Komponenten nicht wirksam werden zu lassen. Dies kann dadurch geschehen, daß der Magnet selbst und/oder die Meßeinheit im dem Trennwerkzeug abgewandten Bereich mit einer Abschirmung umgeben wird, durch welche Störungen des Meßvorganges durch von außen einwirkende magnetische Phänomene ausgeschlossen werden können. Als Abschirmung können beispielsweise umgebende Wände aus magnetisierbaren, insbesondere magnetisch weichen, also nicht permanent magnetischen Materialien wie etwa verschiedene Eisenbleche dienen; sie werden zweckmäßig in erster Linie in Verbindung mit Stabmagneten eingesetzt. Eine elegantere Lösung dieses Problems stellen die bereits erwähnten und bevorzugt eingesetzten Ringspaltmagneten dar, bei denen die Feldlinien auf den dem Trennwerkzeug abgewandten Seiten im wesentlichen im Inneren des Magneten verlaufen, so daß dieser gegen äußere Einflüsse besonders wirksam abgeschirmt und unempfindlich ist.

Zwischen dem Magneten und dem zumindest teilweise aus magnetisierbarem Material gefertigten Trennwerkzeug, also dem Sägeblatt einer Innenloch-, Außentrenn- oder Bandsäge, baut sich ein magnetisches Gleichfeld auf, das sich mit zu- oder abnehmendem Abstand, d.h. mit Abweichung des Trennwerkzeuges aus der Ausgangsposition relativ zum Magneten, seinerseits ändert.

Diese Änderung des magnetischen Gleichfeldes kann durch Messung der Anziehungskraft zwischen dem Trennwerkzeug und dem Magneten erfaßt werden. Dazu können handelsübliche Kraftaufnehmer verwendet werden, sofern sie die erforderliche Empfindlichkeit aufweisen. Geeignete Systeme sind beispielsweise solche auf Basis von Druckmeßstreifen, auf induktiver, kapazitiver oder Halbleiterbasis, oder auf Basis von druckabhängigen Widerstandselementen, wie sie z.B. in Telefonsprechkapseln Verwendung finden. Gleichermaßen geeignet sind optische Systeme oder Piezoelemente, wobei mit letzteren jedoch keine Absolutmessungen vorgenommen werden können.

Eine andere Möglichkeit zur Erfassung der Gleichfeldänderung besteht im Einsatz von Hall-Sonden, bei denen die Änderung des Feldes zu einer Spannungsänderung führt. Solche Hall-Sonden haben den Vorteil, daß sie keine mechanisch bewegten Teile erfordern und daher besonders unempfindlich sind. Ihre Verwendung bei der Messung von magnetischen Feldern ist bekannt und dem Fachmann geläufig.

Daneben ist auch der Einsatz von anderen, ebenfalls die Flußdichte des Magnetfeldes erfassenden Meßgeräten, wie etwa Feldplatten oder Stromwaagen, denkbar.

Der vom Kraftaufnehmer bzw. der Hall-Sonde gelieferte Meßwert kann ggf. unter Zwischenschaltung eines Meßverstärkers auf einer Anzeigeeinrichtung abgelesen und/oder als Ausgangssignal für eine den Lauf des Trennwerkzeuges beeinflussende manuelle oder automatische Regeleinrichtung verwendet werden. Als Beispiel für eine solche Regelung sei auf die Verfahrensweise, welche in der DE-A-36 40 645 beschrieben ist, verwiesen.

Als vorteilhaft hat es sich erwiesen, die Meßeinheit, insbesondere wenn sie als Magnet mit damit verbundenem Kraftaufnehmer gestaltet ist, mit einer Kapselung zu versehen, um störende Fremdeinflüsse durch Luftströmungen, Spritzwasser oder auch durch die bei Trennvorgängen häufig auftretenden kurzfristigen Temperaturschwankungen weitestgehend auszuschalten. Für die Kapselung eignen sich nicht-ferromagnetische Werkstoffe besonders gut, wie beispielsweise Metalle wie Kupfer oder Aluminium oder Kunststoffe wie etwa Polypropylen, Polyethylen oder Polytetrafluorethylen.

Wichtig ist es insbesondere bei der Kraftmessung, die Meßeinheit in einer definierten, während des Trennvorganges sich nicht verändernden Position bezüglich des Trennwerkzeuges anzubringen, so daß das Meßergebnis nicht durch eine Positionsänderung, beispielsweise durch leichtes Kippen des Sensors, verfälscht werden kann. Hall-Sonden sind wegen des Fehlens mechanisch bewegter Teile in dieser Hinsicht weniger empfindlich. Gegebenenfalls können auch Möglichkeiten vorgesehen werden, die eine Justierung oder definierte Änderung der Position z.B. mit Hilfe von Einstellschrauben gestatten, beispielsweise wenn Werkstücke unterschiedlicher Ausmaße oder Scheiben verschiedener Dicke gesägt werden sollen.

Günstig wird die Meßeinheit in Höhe der Schneidkante positioniert, da sich hier Abweichungen von der Sollschnittebene am ehesten bemerkbar machen. Diese Anordnung hat auch den Vorteil, daß das zur Einbettung der Schneidkörner meist verwendete Nickel magnetisch wirksam ist, so daß das erfindungsgemäße Verfahren auch angewendet werden kann, wenn das Sägeblatt selbst aus magnetisch nicht oder nur schwach wirksamen Werkstoffen, wie etwa manchen Stahllegierungen, gefertigt ist.

Bezüglich des Werkstückes wird die Position der Meßeinheit zweckmäßig so gewählt, daß das Trennwerkzeug auf einem möglichst großen Teil seines Weges durch das Werkstück kontrolliert werden kann. Beim Zersägen von Stäben runden Querschnitts wird günstig daher eine Position eingestellt, in der die Meßeinheit entsprechend der Relativbewegung zwischen Werkstück und Trennwerkzeug einen vom Stabscheitel über die Mittelachse zur Stabsohle führenden Bereich überstreicht. Diese Position ist jedoch nicht zwingend vorgeschrieben; die Meßeinheit kann auch ihr gegenüber seitlich versetzt angeordnet sein, und zwar zweckmäßig innerhalb einer davon um etwa zwei Drittel des Stabradius nach links oder rechts abweichenden Zone. Bei noch stärkerer Versetzung besteht insbesondere bei großen Stabdurchmessern die Gefahr, daß Abweichungen des Sägeblattes nicht mehr vollständig erfaßt werden.

Es ist nicht unbedingt erforderlich, die Meßeinheit ausschließlich und während des gesamten Trennvorganges die abzutrennende Scheibe überstreichen zu lassen. Es sind auch Anordnungen denkbar, bei denen die abzutrennende Scheibe nur zeitweise zwischen Meßeinheit und Trennwerkzeug zu liegen kommt oder bei denen durch die Meßeinheit während des Trennvorganges gleichzeitig Teile der abzutrennenden Scheibe und Teile des nicht mehr oder noch nicht in das Werkstück eingreifenden Trennwerkzeuges überstrichen werden, was insbesondere bei Magneten mit entsprechend der Schneidkantenkontur geformtem, z.B. nierenförmigem Querschnitt der Fall ist.

Eine um so genauere Kontrolle des Schnittverlaufes ist möglich, je größer der während des Trennvorganges überwachte Bereich der Eingriffslänge des Trennwerkzeuges ist. Als günstig hat es sich daher erwiesen, die jeweils eingesetzten Magneten so zu formen, daß das von ihnen erzeugte Gleichfeld diese Eingriffslänge zumindest teilweise überstreicht. Eine andere Möglichkeit besteht darin, mehrere Magneten entlang der Eingriffslänge anzuordnen, so daß diese teilweise oder vollständig durch die Messung erfaßt wird. Dabei kann integrierend gemessen werden, so daß die von allen Magneten gelieferten Signale in einen Meßwert zusammengefaßt werden. Es ist jedoch auch möglich, jeden Magneten einzeln die Feldänderungen erfassen zu lassen.

Gemäß einer vorteilhaften Ausführungsform der Erfindung wird zusätzlich mindestens eine Meßeinheit vorgesehen, die die Abweichung des Trennwerkzeuges außerhalb der abzutrennenden Scheibe erfaßt. Vorteilhaft wird auch dafür eine Meßeinheit eingesetzt, mittels derer in der vorstehend erläuterten Art ein magnetisches Gleichfeld zum Trennwerkzeug erzeugt und dessen Veränderung während des Trennvorganges sowie ggf. auch davor oder danach gemessen wird. Grundsätzlich können dafür jedoch auch andere geeignete Geräte, wie etwa Wirbelstrom- oder optische Sensoren, verwendet werden.

In der Regel wird der Schnittverlauf bei dem Verfahren kontinuierlich kontrolliert. Es ist jedoch gleichfalls möglich, diese Kontrolle periodisch durchzuführen, beispielsweise in bestimmten Zeitabständen oder bei bestimmten Relativpositionen zwischen Werkstück und Trennwerkzeug.

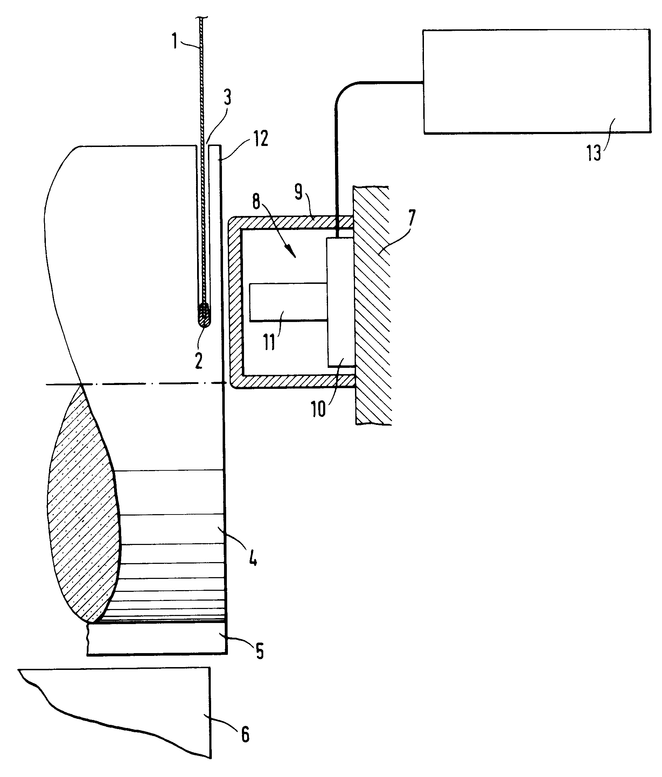

An Hand der Figur wird nachstehend das Verfahren sowie eine zu seiner Durchführung geeignete Vorrichtung weiter erläutert, wobei diese Ausführungen nicht im Sinne einer Beschränkung, sondern nur beispielhaft zu verstehen sind.

In der Figur ist schematisch ein beispielsweise aus gewalztem Stahl gefertigtes Innenlochsägeblatt 1 dargestellt, dessen Schneidkante 2 beispielsweise aus einer Nickelhülle mit tropfenförmigem Querschnitt und darin eingebetteten Diamantschleifkörnern besteht. Das Sägeblatt rotiert mit einer Geschwindigkeit von etwa 500 bis 3500 UPM und arbeitet sich unter Schaffung eines Sägespaltes 3 immer weiter in das Werkstück 4, beispielsweise einen auf eine Graphitschneidleiste 5 aufgekitteten Siliciumstab, ein. Der den Vorschub des Stabes in Richtung Schneidkante bewirkende Werkstücktisch 6 ist hier aus Gründen der Übersichtlichkeit nur schematisch angedeutet.

In definierter Position bezüglich des Trennwerkzeuges, also des Sägeblattes und der Schneidkante, ist mittels der aus Gründen der Übersichtlichkeit nur angedeuteten einstellbaren Halterung 7 eine Meßeinheit 8 angebracht. Sie besteht aus einer beispielsweise aus Aluminium gefertigten Kapselung 9, die den mit einer Kraftmeßvorrichtung 10, beispielsweise einer Kraftmeßdose verbundenen Magneten 11 umhüllt.

Zwischen der Stirnfläche des Magneten 11 und dem System Sägeblatt/Schneidkante wird bei dieser Anordnung ein magnetisches Gleichfeld erzeugt, das die dazwischenliegenden Luftspalte, die Kapselung und insbesondere die abzutrennende Scheibe 12 durchdringt. Bewegt sich nun während des Trennvorganges das Sägeblatt auf den Magneten zu oder von ihm weg, so ändert sich die zwischen beiden bestehende Anziehungskraft und damit der mit Hilfe der Kraftmeßdose erfaßte Meßwert. Entsprechend ändert sich auch das beispielsweise mittels eines Meßverstärkers 33 registrierte und ggf. weitergeleitete Meßsignal.

Die Meßeinheit kann beispielsweise mittels eines optischen Vergleichssystems bezüglich der Abhängigkeit der Anziehungskraft von der Sägeblattauslenkung kalibriert werden, nachdem sie in die gewünschte definierte Position gebracht ist.

Die Ausgangsposition gibt somit den dem ungestörten Sägeblattverlauf entsprechenden Referenzwert. Abweichungen des Sägeblattes vom angestrebten Sollwert können erfaßt und beispielsweise mittels Regeleinrichtungen wieder beseitigt werden.

Das erfindungsgemäße Verfahren und die Vorrichtung ermöglichen es damit, bereits beim Trennvorgang und direkt am Entstehungsort mit einer Auflösung bis in den Bereich von etwa 0.1 µm die Entwicklung von Fehlern zu erkennen und diesen frühzeitig zu begegnen. Es wird dadurch insbesondere möglich, beim Sägen von Halbleiterscheiben die meist als "warp" bezeichnete Verwölbung bzw. Unplanheit der Scheiben zu minimieren oder auch gezielt zu beeinflussen, d.h. Scheiben mit bestimmten "warp" zu sägen. Letztlich kann damit also die geometrische Präzision der Scheiben deutlich gesteigert werden. Einsatzmöglichkeiten liegen vor allem im Bereich der Innenlochsägen, aber auch beim Außentrennen oder beim Bandsägen. Als Werkstücke kommen insbesondere Stäbe oder Blöcke aus den eingangs genannten nichtmagnetisierbaren Materialien, aber auch aus anderen das magnetische Gleichfeld nicht unzulässig beeinflussenden Werkstoffen in Frage.

Nachstehend wird die Erfindung an Hand eines Ausführungsbeispiels näher erläutert:

### Beispiel:

Eine handelsübliche Innenlochsäge (Sägeblattdurchmesser ca. 68 cm, Innenlochdurchmesser ca. 23.5 cm, Sägeblatt aus ca. 150 µm dickem Stahl mit Nickel/Diamant-Beschichtung von ca. 300 µm Stärke an der Schneidkante) war mit einer Halterung versehen, an welcher eine Meßeinheit angebracht war. Diese bestand aus einem Ringspalt-Permanentmagneten (Durchmesser ca. 15 mm, Länge ca. 20 mm, Material Alnico), der durch Schrauben mit einer handelsüblichen, nach dem Dehnungsmeßstreifen-Prinzip arbeitenden Kraftmeßdose verbunden war. Die Einheit war mit einer Umhüllung aus Polyvinylchlorid gekapselt. Die Strinfläche des Magneten war parallel zur Sägeblattebene ausgerichtet, so daß ein Spalt von ca. 3 mm Breite entstand; ihre Unterkante befand sich auf Höhe der Schneidkante, und zwar im Bereich des Scheitelpunktes des Sägeblattes. Die zwischen Sägeblatt und Magnet herrschende Anziehungskraft ergab ein Meßsignal der Kraftmeßdose, welches nach Verstärkung schließlich mittels eines digitalen Voltmeters registriert wurde.

Zur Kalibrierung wurde nun parallel zur Meßeinheit ein optisches Abstandsmeßgerät in Position gebracht, das rotierende Sägeblatt mittels verschieden starker Preßluftströme ausgelenkt, und die dabei optisch gemessenen Abstandswerte sowie die entsprechende Anzeige am Voltmeter festgehalten. Somit konnten die dort erfaßten und abgelesenen Werte einer bestimmten Sägeblattabweichung zugeordnet werden.

Nach Abschluß der Kalibrierung wurde nun in der üblichen Weise ein auf eine Kohleschneidleiste aufgekitteter Siliciumstab (Durchmesser ca. 150 mm, spezifischer Widerstand ca. 0.01 Ω cm) auf dem Vorschubtisch befestigt und in Sägeposition gebracht, um in ca. 800 µm dicke Scheiben zersägt zu werden. Der unmittelbar vor dem Eindringen der Schneidkante in das Werkstück angezeigte Abstandswert (Trennwerkzeug - Meßeinheit) wurde jeweils als Referenzwert festgelegt ("genullt").

Nun wurden unter den üblichen Prozeßparametern zehn Scheiben gesägt und dabei der Schnittverlauf und die Abweichung des Sägeblattes aus der Referenzebene mit Hilfe der Meßeinheit erfaßt und mittels Schreiber registriert. Nach jedem Trennvorgang wurde zusätzlich das Profil der gesägten Stirnfläche des Kristallstabes zwischen Stabscheitel und Stabsohle mit Hilfe eines optischen Sensors vermessen und aufgezeichnet. Ein Vergleich der beiden Meßkurven zeigte bei jeder Scheibe eine ausgezeichnete Übereinstimmung.

Daraufhin wurde die erfindungsgemäße Meßeinheit entfernt und in derselben Position durch einen herkömmlichen Wirbelstromsensor ersetzt, worauf nach entsprechender Kalibrierung unter ansonsten gleichen Bedingungen weitere zehn Scheiben gesägt wurden. Auch nun wurde der Sägeblattverlauf während des Trennvorganges verfolgt und über den Schreiber aufgezeichnet. Ebenso wurde danach die gesägte Stirnfläche des Siliciumstabes optisch vermessen. Bei allen Scheiben mußten nun deutliche Abweichungen zwischen der optisch und der mittels Wirbelstromsensor aufgenommenen Meßkurve festgestellt werden; die Differenz betrug bis zu 120 µm. Diese Verfälschungen des Meßergebnisses beruhen zu einem wesentlichen Teil auf dem Einfluß des hochohmigen Materials, aber auch des beim Sägen zugegebenen Kühlschmiermittels.

## Patentansprüche

1. Verfahren zur permanenten oder periodischen Kontrolle des Schnittverlaufes beim Abtrennen von Scheiben (12) von nichtmagnetisierbaren Werkstücken mittels eines durch das Werkstück bewegten, zumindest teilweise aus magnetisierbarem Material gefertigten Trennwerkzeuges (1) durch Erfassen magnetischer Wechselwirkungen zwischen dem Trennwerkzeug (1) und einer Meßeinheit (8), dadurch gekennzeichnet, daß zwischen Meßeinheit (8) und Trennwerkzeug (1) ein magnetisches Gleichfeld aufgebaut wird, welches beim Trennvorgang die abzutrennende Scheibe (12) zumindest teilweise durchläuft, wobei die dabei durch die Abweichung des Trennwerkzeuges (1) verursachte Änderung des Gleichfeldes erfaßt wird.

2. Verfahren nach Anspruch 1, dadurch gekennzeichnet, daß die Änderung des Gleichfeldes durch Messung der Anziehungskraft zwischen Trennwerkzeug (1) und Meßeinheit (8) erfaßt wird.

3. Verfahren nach Anspruch 1, dadurch gekennzeichnet, daß die Änderung des Gleichfeldes durch Messung der magnetischen Flußdichte erfaßt wird.

4. Verfahren nach einem oder mehreren der Ansprüche 1 bis 3, dadurch gekennzeichnet, daß gleichzeitig mittels zumindest einer weiteren Meßeinheit (8) die Abweichung des Trennwerkzeuges (1) außerhalb der abzutrennenden Scheibe (12) erfaßt wird.

5. Verfahren nach einem oder mehreren der Ansprüche 1 bis 4, dadurch gekennzeichnet, daß das magnetische Gleichfeld mittels mehrerer Einzelmagneten erzeugt wird.

6. Verfahren nach einem oder mehreren der Ansprüche 1 bis 5, dadurch gekennzeichnet, daß das magnetische Gleichfeld mittels Permanent- oder Elektromagneten erzeugt wird.

7. Verfahren nach einem oder mehreren der Ansprüche 1 bis 6, dadurch gekennzeichnet, daß ein magnetisches Gleichfeld erzeugt wird, dessen Feldlinien im wesentlichen senkrecht auf das Trennwerkzeug (1) treffen.

8. Vorrichtung zur Durchführung des Verfahrens nach einem oder mehreren der Ansprüche 1 bis 7, gekennzeichnet durch eine Meßeinheit (8), welche die Erzeugung eines magnetischen Gleichfeldes und die Erfassung von Änderungen desselben gestattet, wobei die Meßeinheit (8) in definierter Position bezüglich des Trennwerkzeuges (1) in der Weise angeordnet ist, daß während des Trennvorganges das Gleichfeld zumindest teilweise durch die abzutrennende Scheibe (12) hindurch mit dem Trennwerkzeug (1) in Wechselwirkung tritt.

9. Vorrichtung nach Anspruch 8, gekennzeichnet durch Abschirmung des magnetischen Gleichfeldes im dem Trennwerkzeug (1) abgewandten Bereich.

10. Vorrichtung nach den Ansprüchen 8 oder 9, dadurch gekennzeichnet, daß zur Erzeugung des magnetischen Gleichfeldes mehrere über eine Fläche verteilte Magneten vorgesehen sind.

## Claims

1. Method for continuously or periodically monitoring the path of the cut in slicing wafers (12) from non-magnetisable workpieces with a slicing tool (1) which is moved through the workpiece and which is manufactured at least partly from magnetisable material, by measuring the magnetic interactions between the slicing tool (1) and a measuring unit (8), characterised in that a magnetic constant field is built up between measuring unit (8) and slicing tool (1) which, during the slicing process, passes at least partly through the wafer (12) to be sliced off and measuring the change in the constant field caused by the deviation of the slicing tool (1).

2. Method according to Claim 1, characterised in that the variation in the constant field is measured by measuring the force of attraction between slicing tool (1) and measuring unit (8).

3. Method according to Claim 1, characterised in that the variation in the constant field is measured by measuring the magnetic flux density.

4. Method according to one of more of Claims 1 to 3, characterised in that the deviation of the slicing tool (1) is simultaneously measured outside the wafer (12) to be sliced off by means of at least one further measuring unit (8).

5. Method according to one or more of Claims 1 to 4, characterised in that the magnetic constant field is produced by means of a plurality of individual magnets.

6. Method according to one or more of Claims 1 to 5, characterised in that the magnetic field is produced by means of permanent magnets or electromagnets.

7. Method according to one of more of Claims 1 to 6, characterised in that a magnetic constant field is produced whose field lines encounter the slicing tool (1) essentially perpendicularly.

8. Apparatus for carrying out the method according to one or more of Claims 1 to 7, characterised by a measuring unit (8) which makes it possible to produce a magnetic constant field and to measure changes therein, the measuring unit (8) being disposed in a defined position with respect to the slicing tool (1) in a manner such that, during the slicing operation, the constant field interacts with the slicing tool (1) at least partly through the wafer (12) to be sliced off.

9. Apparatus according to Claim 8, characterised in that the magnetic constant field is screened in the region facing away from the slicing tool (1).

10. Apparatus according to Claims 8 or 9, characterised in that a plurality of magnets distributed over an area is provided to produce the magnetic constant field.

## Revendications

1. Procédé de contrôle permanent ou périodique de l'allure de coupe lors du découpage de tranches (12) de pièces non aimantables, au moyen d'un outil de coupe (1) déplacé à travers la pièce et réalisé au moins partiellement en un matériau aimantable, par détection d'interactions magnétiques entre l'outil de coupe (1) et une unité de mesure (8), caractérisé en ce qu'entre l'unité de mesure (8) et l'outil de coupe (1) on établit un champ magnétique continu qui, lors de l'opération de coupe, traverse au moins partiellement la tranche (12) devant être séparé par découpage, et on détecte la variation du champ continu, qui est provoquée par la déviation de l'outil de coupe (1).

2. Procédé selon la revendication 1, caractérisé en ce que la modification du champ continu est détectée au moyen de la mesure de la force d'attraction entre l'outil de coupe (1) et l'unité de mesure (8).

3. Procédé selon la revendication 1, caractérisé en ce que la variation du champ continu est détectée par mesure de la densité de flux magnétique.

4. Procédé selon une ou plusieurs des revendications 1 à 3, caractérisé en ce que la déviation de l'outil de coupe (1) à l'extérieur de la tranche (12) devant être séparée par découpage est détectée simultanément au moyen d'une autre unité de mesure (8).

5. Procédé selon une ou plusieurs des revendications 1 à 4, caractérisé en ce que le champ magnétique continu est produit au moyen de plusieurs aimants individuels.

6. Procédé selon une ou plusieurs des revendications 1 à 5, caractérisé en ce que le champ magnétique continu est produit au moyen d'aimants permanents ou d'électroaimants.

7. Procédé selon une ou plusieurs des revendications 1 à 6, caractérisé en ce qu un champ magnétique continu est produit, dont les lignes de champ rencontrent sensiblement perpendiculairement l'outil de coupe (1).

8. Dispositif pour la mise en oeuvre du procédé selon une ou plusieurs des revendications 1 à 7, caractérisé par une unité de mesure (8), qui permet de produire un champ magnétique continu et de détecter des variations de ce champ, l'unité de mesure (8) étant disposée dans une position définie par rapport audit outil de coupe (1) de telle sorte que, pendant l'opération de coupe, le champ continu coopère au moins partiellement, à travers la tranche (12) devant être séparée par découpage, avec l'outil de coupe (1).

9. Dispositif selon la revendication 8, caractérisé par une protection du champ magnétique continu dans la zone située à l'opposé de l'outil de coupe (1).

10. Dispositif selon la revendication 8 ou 9, caractérisé en ce que pour la production du champ continu magnétique, il est prévu plusieurs aimants répartis sur une surface.
